Europäisches Patentamt

European Patent Office

Office européen des brevets

(19)

(11) Publication number: 0 198 929
A1

(12) EUROPEAN PATENT APPLICATION

(21) Application number: 85104715.9

(22) Date of filing: 18.04.85

(51) Int. Cl.⁴: A 61 J 3/00
A 23 G 3/26

(43) Date of publication of application:
29.10.86 Bulletin 86/44

(84) Designated Contracting States:
CH DE FR GB IT LI NL

(71) Applicant: Takeda Chemical Industries, Ltd.
27, Doshomachi 2-chome Higashi-ku
Osaka-shi Osaka, 541(JP)

(71) Applicant: Freund Industrial Co., Ltd.
14-2 Takadanobaba, 2-Chome Shinjuku-ku
Tokio 160(JP)

(72) Inventor: Miyata, Katsuaki
7-5, Kohda 2-chome
Ikeda Osaka(JP)

(72) Inventor: Sakuma, Yutaka
20-3, Kohfuudai 6-chome
Toyono-cho Toyono-gun Osaka(JP)

(72) Inventor: Motoyama, Shimesu
7-44, Asashigaoka 2-chome
Asaka Saitama(JP)

(72) Inventor: Gotou, Masakazu
10-16, Daita 3-chome
Setagaya-ku Tokyo(JP)

(72) Inventor: Shirakawa, Hiromu
6-2, Kyuden 1-chome
Setagaya-ku Tokyo(JP)

(72) Inventor: Makino, Takamoto
7-11-304, Chiyoda 4-chome
Sakado Saitama(JP)

(74) Representative: Dr. Elisabeth Jung Dr. Jürgen
Schirdewahn Dipl.-Ing. Claus Gernhardt
P.O. Box 40 14 68 Clemensstrasse 30
D-8000 München 40(DE)

(54) Coating apparatus.

(57) An apparatus for coating pharmaceutical tablets or the like with other material such as sugar or the like. The apparatus includes a cylindrical rotary coating pan (1) in which the tablets (6) are charged and tumbled, and at least one perforated area (2) for ventilating hot gas or the like so as to dry the sugar coated on the tablets (6). The perforated area (2) of the coating pan (1) is covered by each of baffle members (12). The baffle members (12) being hollow are provided at positions to cover ventilating areas in the coating pan (1), formed to be at least partially increased in width from the leading edge (12a) to the trailing edge (12b) relative to the rotational direction of the coating pan (1) and each have a ventilating opening (13) communicated with the ventilating areas. Each of baffle members (12) is formed of a hollow tube polygonal or cylindrical in cross section. A ventilating member (15) for preventing a raw material to be coated from leaking is provided at the ventilating opening (13) of the baffle member (12).

FIG. 3

EP 0 198 929 A1

0198929

# TITLE OF THE INVENTION

Coating Apparatus

## BACKGROUND OF THE INVENTION

1. Field of the Invention

This invention relates to a coating apparatus, more particularly, a coating apparatus for coating pharmaceutical or food tablets or the like with a layer of other medical composition or sugar etc., which apparatus includes a rotatable coating pan, the side wall of which has a ventilating area or areas for feeding dry air as a ventilating and drying mechanism.

2. Description of the Prior Art

When, in a coating apparatus, a coating material, such as a film liquid or a sugar solution, is sprayed on the surface of a material to be coated, such as tablets or a granular raw material, and thereafter, the coating material is dried, there has heretofore been adopted a method wherein the tablets as being the material to be coated are tumbled in a coating pan by the rotation of the coating pan, while heated air is blown onto the surface of a bed of the tablets to dry the tablets. However, according to the conventional method of the type described, although it is possible to relatively sufficiently dry only the tablets in the surface zone of the bed, the tablets in the inside and lower zones of the bed are insufficiently dried

- 1 -

because the heated gas cannot reach such zones. Therefore, it takes long time to dry all of the tablets in the coating pan, and it is difficult to dry the tablets uniformly.

For eliminating these drawbacks, the present applicant has proposed a coating apparatus shown in Fig. 1 and 2, which is disclosed in the Japanese Patent Publication No. 38713/1975. This coating apparatus is provided with a ventilating and drying mechanism comprised of perforated areas 2 for ventilating air, arranged axially in a plurality of circumferential positions of whole circumference of a rotatable coating pan or rotatable drum 1, an air supply conduit 3, an exhaust or suction duct 4, and exhaust conduit 5. In this coating apparatus, the heated air blown into the coating pan 1 from the air supply conduit 3 is blown onto tablets 6 tumbled in the coating pan 1, and after passing through the bed of the tablets 6, the heated air is exhausted from the exhaust conduit 5 via the perforated area 2 and the exhaust duct 4. Therefore, this coating apparatus is used as an excellent coating apparatus in practice, because, in this coating apparatus, the heated gas can contact uniformly with the tablets 6 not only in the surface zone but also in the inside and lower zones of the bed thereof while passing through the bed of the tablets, the heat efficiency is very high, and it is possible to obtain homogeneous product dried with overall uniformity and with high productivity.

Further, as the result of the high heat efficiency provided by this coating apparatus, it is possible to perform coating operation efficiently and in low cost, using an aqueous coating solution wherein coating material is dissolved or dispersed in the water (in this connection, refer to the Japanese Patent Publication No. 5491/1980).

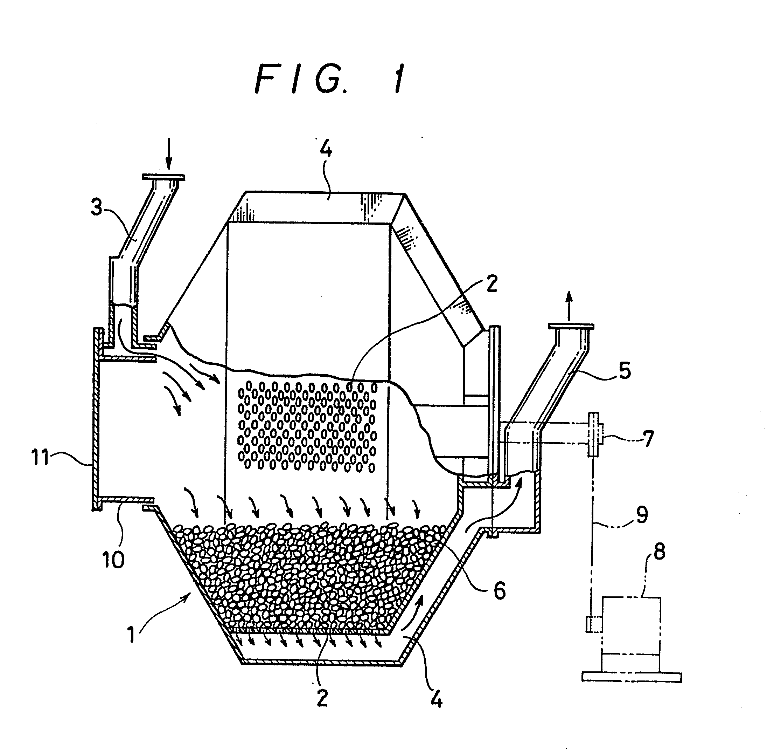

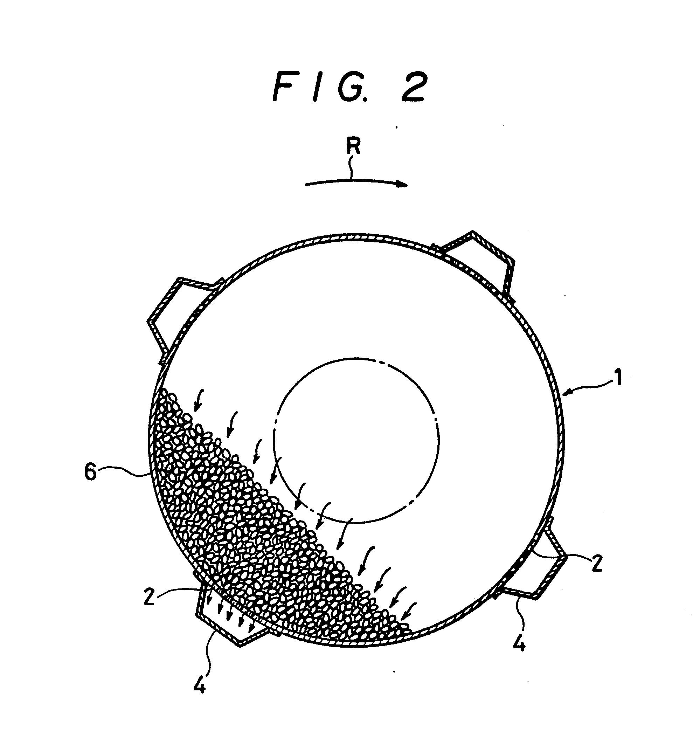

Moreover, in Figs. 1 and 2, the reference numeral 7 is a rotary shaft for rotating the coating pan 1, 8 is a motor for driving the rotary shaft 7 via transmission means 9 such as a belt or a chain, 10 is a cylindrical portion which forms a charging opening through which tablets 6 to be coated are charged into the coating pan 1, and 11 is a cover for the cylindrical portion 10. These cylindrical portion 10, cover 11 and air supply conduit 3 and exhaust conduit 5 do not rotate. The connecting portions between these non-rotating members and rotating members of the coating pan 1 etc. are sealed by labyrinth type sealing means etc.

Now, in such a coating apparatus as above, there are provided a plurality of ventilating through apertures having circular, rectangular or elliptic shapes in the perforated area 2 to increase the numerical aperture of the perforated area 2 in order to reduce the resistance to the ventilation through the perforated area 2. But, there is a possibility of causing such a phenomenon that, as a large quantity of the material to be coated is processed in the coating pan, the tablets or other granular materials being coated are clogged in the ventilating apertures to block the apertures. When the ventilating apertures are blocked, the smooth flow of the heated gas is prevented to produce non-uniform ventilation, and the pressure loss of the ventilation system becomes increased or changed to make the coating operation instable. Further, it takes longer time for drying because of the reduction of the heat efficiency.

Alternatively, there is proposed other coating system, in which a powdery raw material is used in place of a portion of coating solution to reduce the energy for drying by using the above-described coating apparatus. However, in this coating system, because the powdery material is leaked through the ventilating aperture and the leaked powdery material is let out of the system through the exhaust duct and conduit, not only a product having non-uniform components is produced, but also loss of expensive powdery raw material and environmental pollution occur.

Such problems arise not only in a conical shaped coating apparatus, but also in other cylindrical coating apparatus disclosed in the Japanese Utility Model Publication No. 21466/1981, or an onion or a pear shaped coating apparatus.

Then, to eliminate the above-described drawbacks, the present applicant has proposed a construction having a baffle or scoop plate covering the ventilating areas within the coating pan (Japanese Patent Application No. 174273/1982). This construction can offer such outstanding advantages that it can prevent the leak of powdery material through ventilating areas and blocking of the ventilating areas, increase the drying efficiency, produce homogeneously coated products and so on.

Now, as the apparatus of the type described, necessity has been voiced for achieving combined effects of smoothing the material to be coated, controlling damages thereof and occurrence of noises therefrom, increasing the effect of mixture, further, raising the rate of charge and so on, in addition to the prevention of the leak of powdery material.

SUMMARY OF THE INVENTION

The present invention has been developed to eliminate the above-described drawbacks of the prior art and has as its object the provision of a coating apparatus which can not only prevent the leak of powdery material from the ventilating areas of the coating pan, but also smooth the flow of the raw material to be coated, further, prevent damages thereof and occurrence of noises therefrom and secure the rate of charge.

To this end, the present invention contemplates that the coating apparatus is provided with hollow baffle
or scoop means or plates being provided at positions to
cover ventilating areas in the rotatable coating pan,
formed to be at least partially increased in width from the
leading edge to the trailing edge relative to the rotational
direction of the coating pan, and each having a ventilating
opening communicated with the ventilating areas.

The coating apparatus according to the present
invention can smooth the flow of the material to be coated,
improve the effect of agitating and mixing, and control
damages of the material to be coated and occurrence of
noises.

BRIEF DESCRIPTION OF THE DRAWINGS

Other objects and advantages of the present
invention will become apparent from the following detailed
description taken in conjunction with preferred embodiments
shown in the accompanying drawings, in which:

Fig. 1 is a side sectional view of a conventional
coating apparatus shown partly in broken view;

Fig. 2 is a general front sectional view of the
apparatus shown in Fig. 1;

Fig. 3 is a side sectional view of a coating
apparatus according to one embodiment of the present
invention shown partly in broken view;

Fig. 4 is a general front sectional view of the apparatus shown in Fig. 3;

Fig. 5 is an enlarged sectional view of the portion A in Fig. 4;

Fig. 6 is a plan view showing one embodiment of a baffle means according to the present invention;

Fig. 7 is a side view thereof;

Fig. 8 is a view in looking from the side of the trailing edge thereof;

Fig. 9 is a view in looking from the side of the leading edge thereof;

Fig. 10 is a perspective view thereof;

Fig. 11 is a view showing a comparison of the effect of preventing the tablets from being broken according to the present invention with that of the conventional technique; and

Figs. 12 to 34 are perspective views showing other various embodiments of the baffle means according to the present invention.

## DETAILED DESCRIPTION OF THE PREFERRED EMBODIMENTS

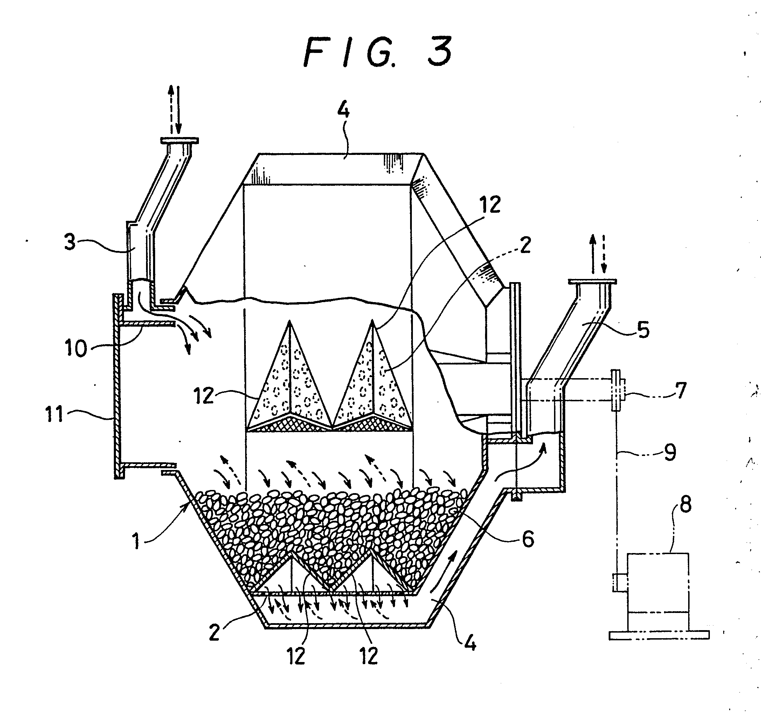

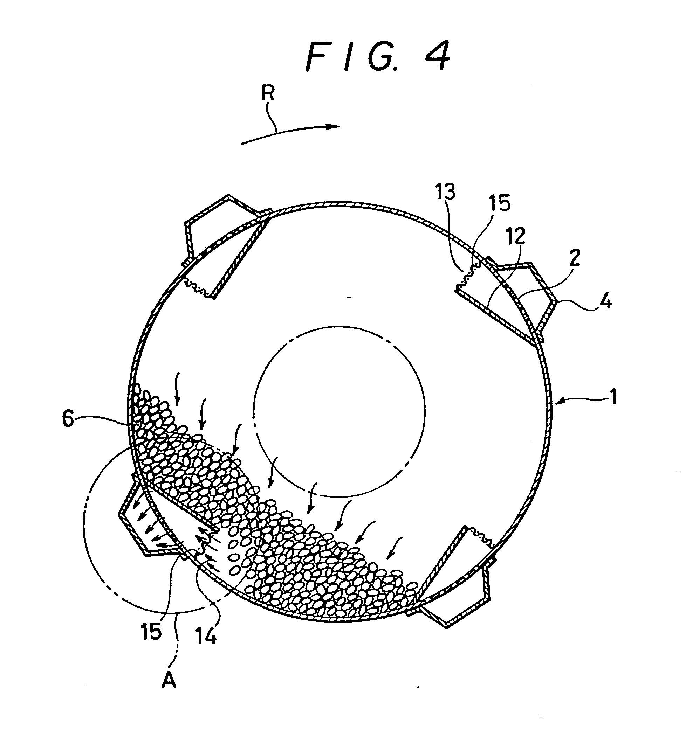

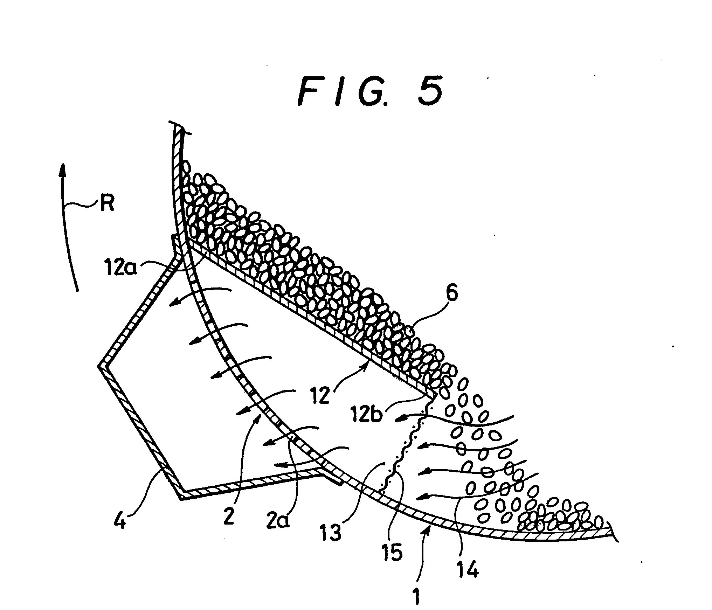

Referring now to the drawings, Fig. 3 is a partial side sectional view generally showing one embodiment of the coating apparatus according to the present invention, Fig. 4 is a general front sectional view of the apparatus shown in Fig. 3, and Fig. 5 is an enlarged partial sectional view of the portion A of Fig. 4.

8

In this embodiment, the portions or members corresponding to those of the conventional structure shown in Figs. 1 and 2 are depicted by the same reference numerals as the latter to avoid doubled description.

In the embodiment shown in Fig. 3, the rotatable coating pan 1 has a substantially conical side elevational shape. In the coating pan 1, there is provided a baffle or scoop means 12 having a tapered shape from the trailing edge 12b to the leading edge 12a relative to a rotational direction R of the coating pan 1 at a position to cover entirely or partially each perforated area 2 of the coating pan 1.

The baffle means 12 scoops the material to be coated, such as the tablets 6, other granular raw material or the like tumbled along the inner wall surface of the coating pan 1 due to the rotational movement of the coating pan 1 from the leading edge 12a to the trailing edge 12b, whereby the baffle means smoothes the flow of the tablets 6, improves the mixing and agitating of the tablets 6 and prevents the rate of charge from being reduced.

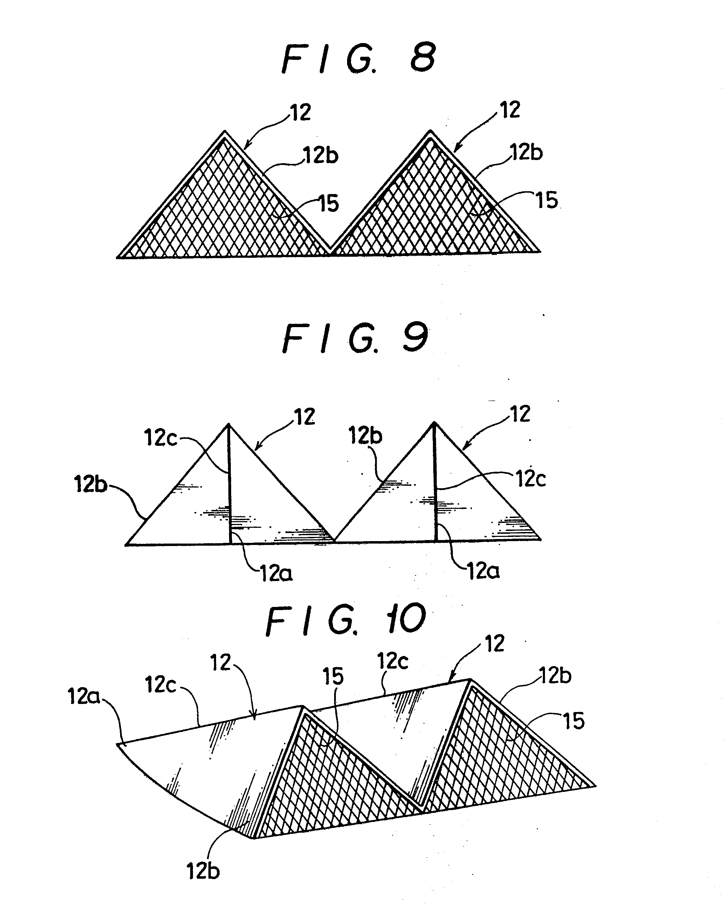

Therefore, as apparent from Figs. 4 to 10, the baffle means 12 is constructed such that the leading edge 12a has a pointed tapered shape relative to the rotational direction R of the coating pan 1, the trailing edge 12b has a height H, to which the minimum height of the leading edge 12a is gradually increased along an inclined side edge 12c, and has a width W, to which the minimum width of the leading edge 12a is gradually increased, whereby the baffle means 12 is inclined both in the vertical and the horizontal directions. The bottom face of the side portion of the baffle means 12 is fixed to the inner wall surface of the coating pan 1 by welding etc. from the leading edge 12a to the trailing edge 12b. This baffle means 12 is formed at the trailing edge 12b thereof with a triangular ventilating opening 13, which is communicated with ventilating apertures 2a of the perforated area 2 formed in the wall surface of the coating pan 1, so that the flow of the gas 14 can flow into and out of the coating pan 1.

A ventilating member 15 formed of a mesh for ventilating the leak of the tablets 6 or the like is provided at the position of the ventilating opening 13 of the baffle means 12.

As for the dimensions of the baffle means 12 in this embodiment, there are generally adopted the following ranges, however, the dimensions may be further decreased.

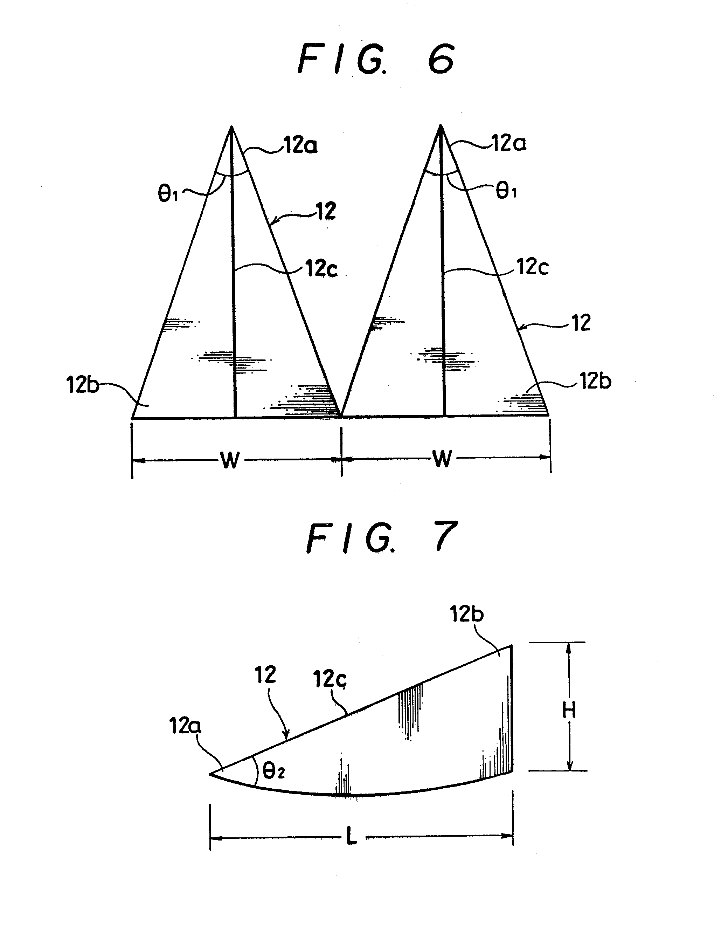

Namely, the height H of the baffle means 12 (Refer to Fig. 7) is from one-third to one-twentieth of the inner diameter of the coating pan 1, the length L (Refer to Fig. 7) is from one-fourth to one-fortieth of the inner diameter of the coating pan 1, the width W (Refer to Fig. 6) is from one-half to one-twentieth of the axial length of the coating pan 1, an angle $\theta_1$ of the leading edge 12a in the rotational direction of the baffle means 12 is from 20° to 120° and an angle of inclination $\theta_2$ of the side edge 12c is from 10° to 90°.

In this embodiment, two tridimensional, hollow and triangular baffle means 12 are arranged integrally and in parallel to each other, however, three baffle means 12 may be arranged integrally and in parallel to one another, or a single baffle means may be used.

In this embodiment, a plurality of baffle means 12 are provided for the perforated areas 2 formed at four positions arranged in the circumferential direction of the coating pan 1, respectively.

The operation of this embodiment is described in the following.

At first, the cover 11 of the cylindrical portion 10 of the coating pan 1 is opened, and the tablets 6 as being the raw material to be coated are charged into the coating pan 1. Then, a desired coating solution is sprayed by a conventional spray mechanism, not shown, into the coating pan 1 through the cylindrical opening 10, and a layer of the coating material is formed on the tablets 6 tumbled along the inner wall surface of the coating pan 1 due to the rotational movement of the coating pan 1. Subsequently, the heated gas is blown into the coating pan 1 via the supply conduit 3, and flows through the bed of the tablets 6 coated with the coating material, and then, exhausted out of the coating pan 1 through the ventilating apertures 2a (Refer to Fig. 5) of the perforated area 2.

At that time, in this embodiment, as the baffle means 12 are provided on the inner wall surface of the coating pan 1, the tablets 6 tumbled along the inner wall surface of the coating pan 1 by the rotary movement of the coating pan 1 are scooped or raised on the baffle means 12 at the leading edge 12a thereof, then, along the inclined side wall surface of the baffle means 12, and pushed to the side of the baffle means 12.

In consequence, the flow of the tablets 6 is changed into a smooth one by the baffling action and scooping action of the baffle means 12 and the agitating and mixing between the tablets 6 with one another can be greatly facilitated.

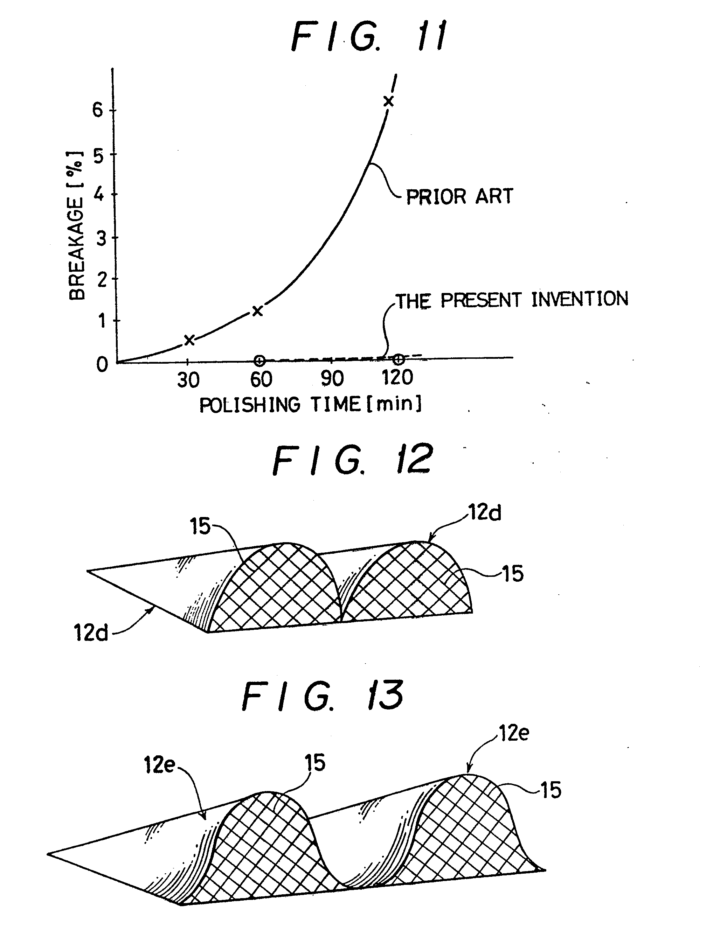

Furthermore, in this embodiment, as shown in Fig. 11, the rate of occurrence of breakages at the time of polishing of the tablets 6 according to the present invention (indicated by a broken line) is by far lower than that in the prior art shown in Figs. 1 and 2 (indicated by solid lines in Fig. 11), thereby enabling to obtain highly satisfactory effect of preventing the tablets from being broken.

Further, as for the prevention of the leakage of the raw material such as a dusting powder, according to experiments conducted by the present inventor, the effect of 12.3 - 20.0% was obtained in the prior art shown in Fig. 1, whereas 1.0% was achieved according to the present invention, thus enabling to attain an outstanding effect

- 11 -

of preventing the powder leak.

Additionally, the smooth movement of the tablets 6 in the coating pan 1 makes it possible to minimize the noises during the coating operation.

Moreover, as for the maximum rate of charge, when it is determined to be 100% with no structure being present in the coating pan 1 as shown in Figs. 1 and 2, the maximum rate of charge is 95.5% according to the present invention, whereby the rate of charge is slightly decreased.

Figs. 12 to 34 are perspective views showing various embodiments of the baffle means according to the present invention.

At first, the baffle means in an embodiment shown in Fig. 12 is of such an arrangement that there are provided integrally and in parallel to each other two baffle means 12d, each of which is tapered such as to be decreased in height and width from the trailing edge to the leading edge and has a generally semicircular shape in cross section, so that the outstanding effects of agitating and mixing, preventing the breakages and so on can be obtained.

In an embodiment shown in Fig. 13, there are integrally arranged two tapered and wave-shaped baffle means 12e.

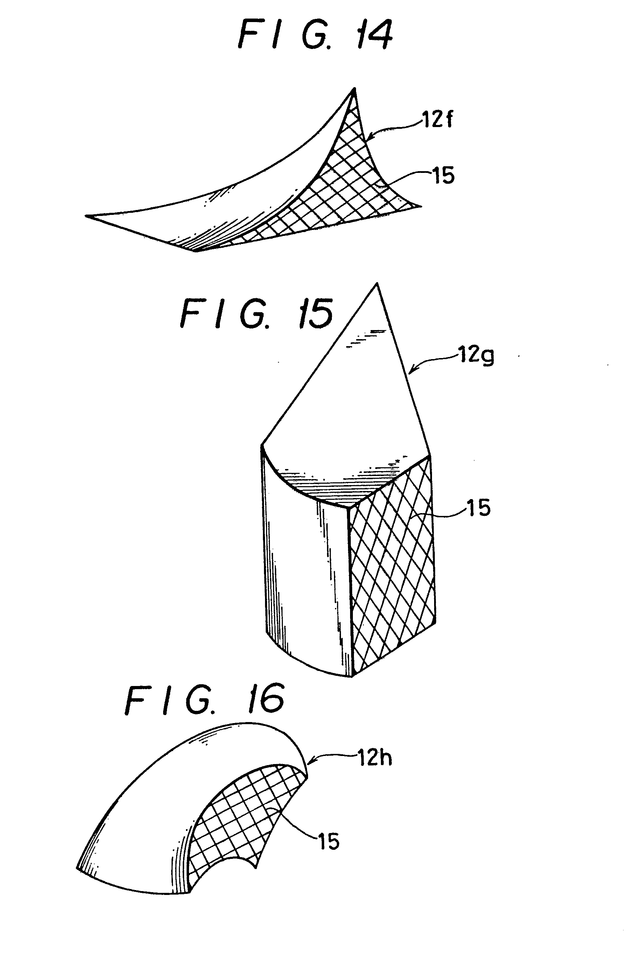

An embodiment shown in Fig. 14 shows a construction of a baffle means 12f of a curved-surfaced and tridimensional shape. In this case also, a satisfactory coating operation can be performed by the baffling action and scooping action by the baffle means 12f.

Fig. 15 shows a hollow baffle means 12g being of a generally wedge shape in the horizontal cross section. In the case of this baffle means 12g, when the bottom face thereof is secured to the inner wall surface of the coating pan 1, the baffle means 12g projects considerably long to the center of the coating pan, whereby a further larger buffling action can be obtained, so that a very good effect of agitating and mixing can be achieved.

Fig. 16 shows a baffle means 12h being of a generally half-cup-formed and curved-surfaced shape.

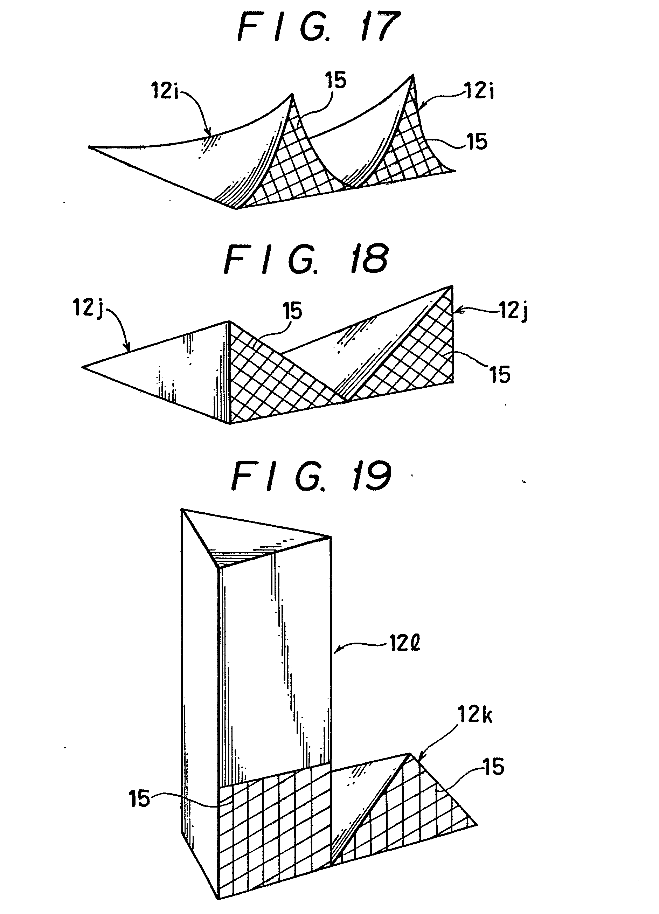

Fig. 17 shows two baffle means 12i each being of a curved-surfaced shape similar to the one shown in Fig. 14, which are integrally connected to each other.

Fig. 18 shows two baffle means 12j each being of a right-angled triangular shape in cross section, which are arranged integrally and in parallel to each other.

Fig. 19 shows a hollow and triangular baffle means 12k and a hollow tubular baffle means 12ℓ being of a triangular shape in cross section, which are arranged integrally and in parallel to each other. In this case, the baffle means 12k mainly performs the tablet scooping action, while, the baffle means 12ℓ mainly performs the baffling action, so that the combined effects of the agitating and mixing etc. can be attained generally.

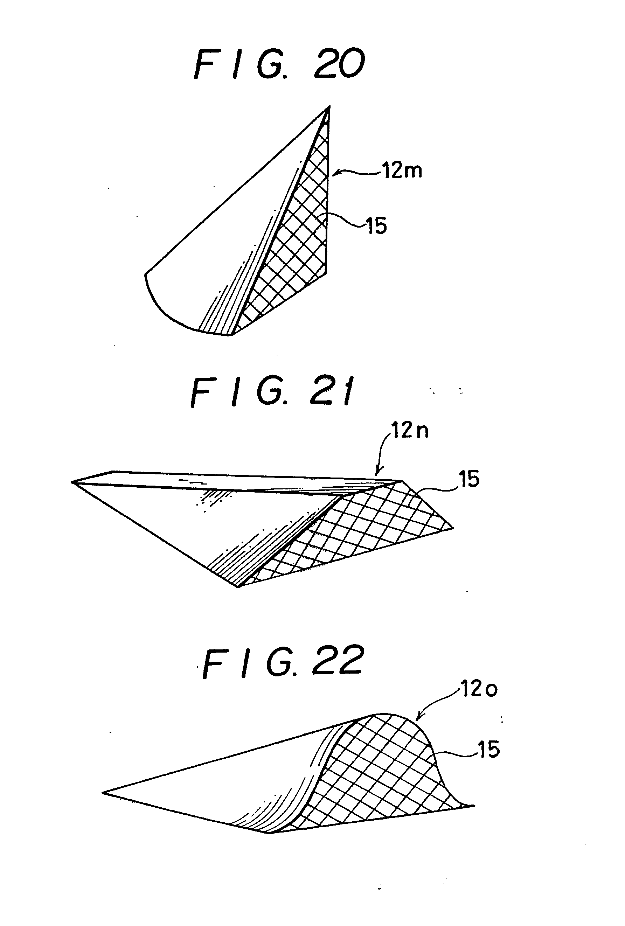

Fig. 20 shows a generally half-cone shaped baffle means 12m, Fig. 21 a baffle means 12n being of a generally trapezoidal shape in cross section, and Fig. 22 a tapered and hollow baffle means 12o being of a generally waveshape in cross section, respectively.

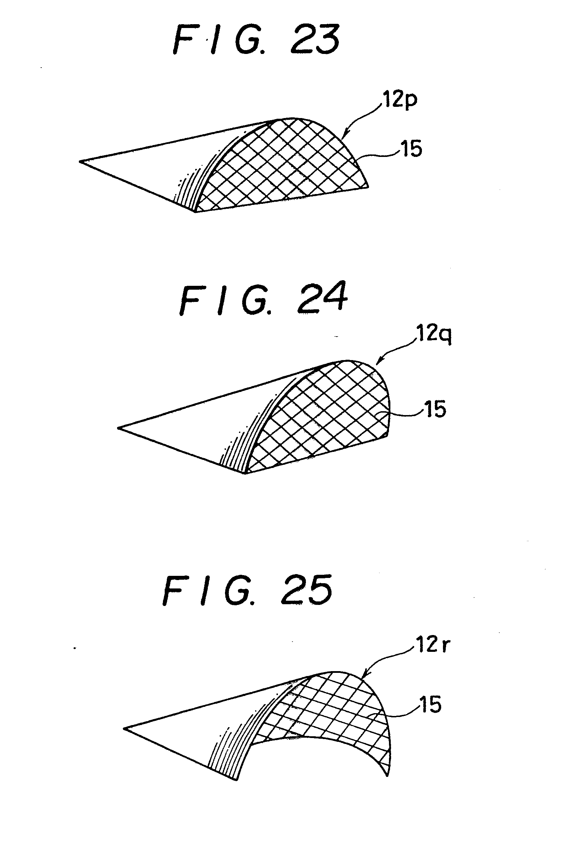

Figs. 23, 24 and 25 show tapered and hollow baffle means 12p, 12q and 12r each being of a generally semicircular shape in cross section.

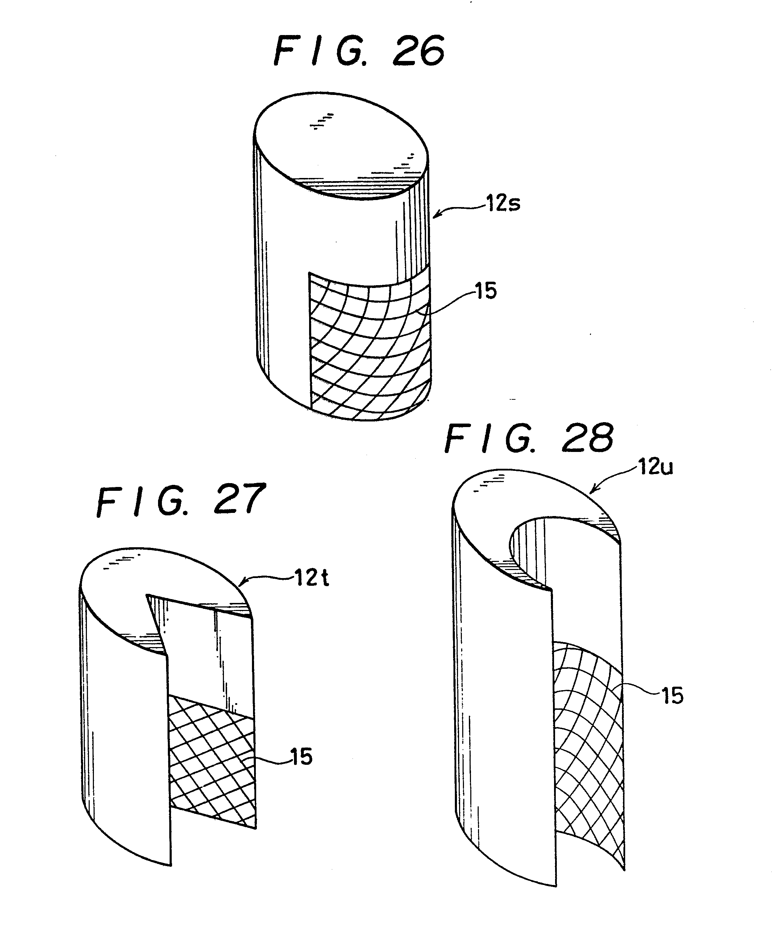

Fig. 26 shows a baffle means 12s being of a cylindrical shape, Fig. 27 a baffle means 12t being of a cylindrical shape with a groove being triangular in cross section, and Fig. 28 a baffle means 12u being of a cylindrical shape with a groove being round in cross section. These baffle means can give the satisfactory effects of agitating and mixing by the very large baffling action.

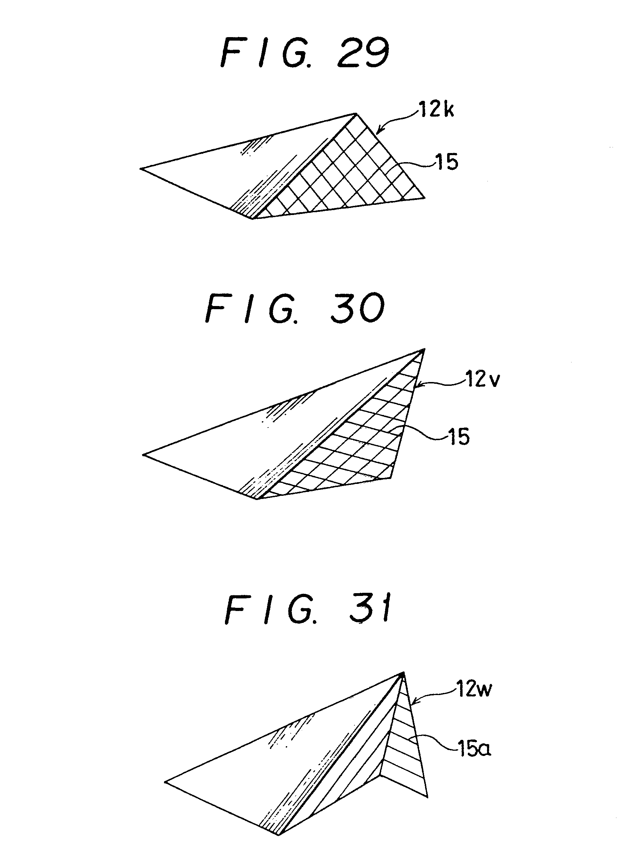

Figs. 29, 30 and 31 show the construction of baffle means each being of a hollow and triangular shape. The baffle means shown in Fig. 29 has the construction of the baffle means 12k shown in Fig. 19 being used singly, the baffle means 12v shown in Fig. 30 has the height slightly larger than the baffle means 12k, and the baffle means 12w shown in Fig. 31 has the construction of combined triangular shapes. Furthermore, a ventilating member 15a in Fig. 31 is comprised of a mesh for preventing the powder leak, which is stretched in lines in one direction.

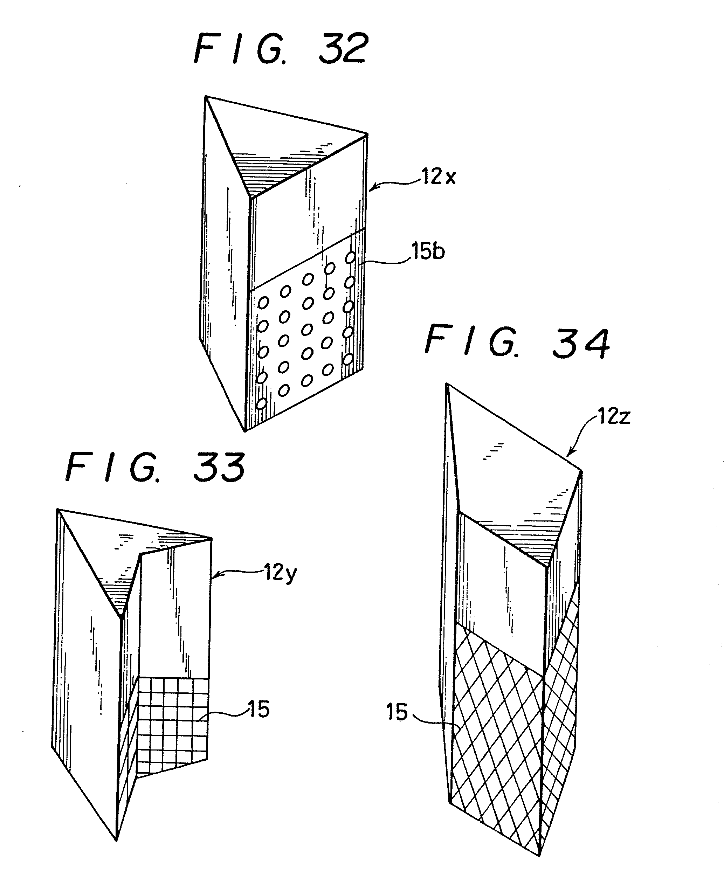

Further, baffle means 12x, 12y and 12z as shown in Figs. 32, 33 and 34 are hollow and have a regular triangular shape, a deformed triangular shape and a square shape, in the horizontal cross section, respectively. In an embodiment shown in Fig. 32, a ventilating member 15b has a construction of preventing the powder leak, which is made of a perforated plate.

Additionally, the present invention need not necessarily be limited to the above embodiments, and other various modifications are adoptable.

Furthermore, the present invention is not only applicable to the conical type coating apparatus, but also applicable to the coating apparatuses of a cylindrical type, an onion type, a pear type and the like.

Further, the present invention is applicable to various fields of the coating treatments of foods, feedstuffs, agricultural medicines, manures, toners etc. in addition to the pharmaceuticals such as the tablets in the above embodiments. If desired, the present apparatus may be used for granulation.

As has been described hereinabove, according to the present invention, there are provided the hollow baffle means constructed such that each of said baffle means is at least partially increased in width from the leading edge to the trailing edge relative to the rotational direction of the coating pan, and has the ventilating opening communicated with the ventilating areas, so that

- 15 -

the following outstanding combined effects can be achieved.

(1)   The flow of the raw material to be coated can be smoothed and the effect of agitating and mixing the raw material to be coated can be improved.

(2)   The raw material to be coated can be prevented from being damaged or generating noises.

(3)   Leak of raw material from the ventilating areas of the coating pan can be prevented.

(4)   Lowered rate of charge due to the provision of the baffle means can be controlled.

(5)   The baffle means project satisfactorily long to the interior of the coating pan, so that far larger effect of agitating and mixing can be obtained.

WHAT IS CLAIMED IS:

1.      A coating apparatus provided on the side wall of a rotatable coating pan thereof with ventilating areas, wherein said apparatus further provided at positions covering said ventilating areas in said coating pan thereof with hollow baffle means constructed such that each of said baffle means is at least partially increased in width from the leading edge to the trailing edge in the rotational direction of said coating pan, and has a ventilating opening communicated with said ventilating areas.

2.      The coating apparatus as set forth in claim 1, wherein said baffle means is gradually increased in height from the leading edge to the trailing edge thereof.

3.      The coating apparatus as set forth in claim 1, wherein said baffle means comprises a hollow member projecting satisfactorily long to the interior of said coating pan.

4.      The coating apparatus as set forth in claim 1, wherein a plurality of said baffle means are provided.

5.      The coating apparatus as set forth in Claim 4, wherein said plurality of baffle means have shapes different from each other.

6.      The coating apparatus as set forth in claim 1, wherein a leak preventing means for preventing raw material to be coated from leaking out toward ventilating areas of said coating pan is provided at said ventilating opening.

7.      The coating apparatus as set forth in claim 6, wherein said leak preventing means comprises a mesh.

8.      The coating apparatus as set forth in claim 6, wherein said leak preventing means comprises a perforated plate.

9.      The coating apparatus as set forth in claim 1, wherein the leading edge portion in the rotational direction of said baffle means is flared at an angle from 20° to 100° from the leading edge to the trailing edge in the rotational direction of said coating pan.

10.     The coating apparatus as set forth in claim 2, wherein an angle of inclination of said baffle means is from 10° to 90°.

11.     The coating apparatus as set forth in claim 2, wherein the height of said baffle means is from one-third to one-twentieth of the inner diameter of said coating pan, the length is from one-fourth to one-fortieth of the inner diameter of said coating pan, and the width is from one-half to one-twentieth of the axial length of said coating pan.

12.     The coating apparatus as set forth in claim 3, wherein said hollow member is a polygonal tube or a deformed polygonal tube, and one corner of said tube is oriented on the side of the leading edge in the rotational direction of said coating pan.

13.     The coating apparatus as set forth in claim 3, wherein said hollow member is a cylinder or a deformed cylinder.

# FIG. 1

# F I G. 2

R

FIG. 3

# F I G. 4

# F I G. 5

# F I G. 6

12a

$\theta_1$

12

12c

12b

12

12c

12b

W

W

# F I G. 7

12b

12

12c

12a

$\theta_2$

H

L

# F I G. 8

12
12b
15
12
12b
15

# F I G. 9

12c
12
12b
12b
12
12c
12a
12a

# F I G. 10

12
12c
15
12c
12
12b
12a
12b
15
12b

# FIG. 11

BREAKAGE [%]

PRIOR ART

THE PRESENT INVENTION

POLISHING TIME [min]

# FIG. 12

# FIG. 13

9/15

FIG. 14

12f

15

FIG. 15

12g

15

FIG. 16

12h

15

0198929

# F I G. 17

12i    15    12i
          15

# F I G. 18

12j    15    12j
          15

# F I G. 19

12ℓ

12k

15    15

11/15

# FIG. 20

12m
15

# FIG. 21

12n
15

# FIG. 22

12o
15

# F I G. 23

12p
15

# F I G. 24

12q
15

# F I G. 25

12r
15

0198929

# F I G. 26

12s

15

# F I G. 28

12u

15

# F I G. 27

12t

15

15

# F I G. 29

12k

15

# F I G. 30

12v

15

# F I G. 31

12w

15a

# F I G. 32

12x

15b

# F I G. 34

12z

# F I G. 33

12y

15

15

# European Patent Office

## EUROPEAN SEARCH REPORT

Application number

EP 85 10 4715

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-2 533 825 (FREUND INDUSTRIAL CO. LTD.) * Page 6, line 22 - page 10, line ; page 15, lines 20-37; figures 4,16 * & JP - D - 17 427 382 (Cat. D) | 1 | A 61 J 3/00 A 23 G 3/26 |

-----

TECHNICAL FIELDS SEARCHED (Int. Cl 4)

A 61 J
A 23 G
B 01 J
F 26 B

The present search report has been drawn up for all claims

| Place of search | Date of completion of the search | Examiner |
|---|---|---|
| THE HAGUE | 06-12-1985 | BAERT F.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82